# EUROPEAN PATENT SPECIFICATION

(11) **EP 0 785 607 B1**
(45) Date of publication and mention of the grant of the patent: **13.05.2009**
(21) Application number: 97104775.8
(22) Date of filing: 20.08.1991
(51) Int. Cl.: H02B 1/32, H02B 1/052

(54) **Improvements relating to the mounting of circuit breakers**
Verbesserung in Bezug auf die Befestigung von Schaltern
Perfectionnements relatif à la fixation des disjonteurs

(30) Priority: 21.08.1990 GB 9018346
(43) Date of publication of application: 23.07.1997
(62) Divisional of application: 91307670.9
(73) Proprietor: Electrium Sales Limited, Brownhills, WS8 6JZ (GB)
(72) Inventor: Bowen, Peter William, Sutton Coldfield, West Midlands, B75 6BP (GB); Shotter, Darren John, Cannock, Staffs, WS12 5UY (GB)
(74) Representative: Wardley, Diana Mary

(56) References cited:
- EP-A- 0 109 881
- EP-A- 0 352 149
- FR-A- 2 211 993
- FR-A- 2 571 183
- FR-A- 2 634 326

## Description

This invention is concerned with improvements relating to the mounting of circuit breakers.

A conventional circuit breaker, hereinafter referred to as being of the kind specified, comprises a generally flat, parallel-sided body provided on the underside thereof with a mounting recess which in use is positioned over and engaged with a mounting rail, with a primary plane of the circuit breaker, extending parallel to the flat sides, extending at right angles to the length of the mounting rail.

A conventionally used mounting rail is termed a "din-rail", being of inverted top hat cross-section, comprising parallel upwardly-facing flanges and narrow outwardly-turned lips.

Conventionally the circuit breaker is provided on the underside thereof with an inwardly-turned lip, providing a fixed retaining formation having a re-entrant surface, an opposite side edge portion of the recess being bounded by straight edge. The circuit breaker comprises a catch assembly, resiliently urged from a retracted position to an advanced position, in which advanced position a retaining element of the catch assembly projects through said straight edges a short distance into the recess.

In use, the circuit breaker is engaged with the mounting rail, the retaining formation being engaged beneath one of the lips with the underside of the circuit breaker inclined relative to the mounting rail, and the circuit breaker moved angularly so as to cause the retaining element to engage the other lip, the profile of the retaining element causing it to be momentarily depressed against the resilient force urging it to its advanced position, as it passes behind the other lip. The circuit breaker is then clamped in conventional manner to a bus-bar, supported in parallel relationship to the mounting rail, with a primary plane of the circuit breaker extending parallel to the flat side extending at right angles to the length of the mounting rail, with the flat faces of the circuit breaker lying against the flat faces of adjacent circuit breakers.

When it is required to move one circuit breaker from an array of circuit breakers on the rail, the retaining element is manually retracted, and held retracted, and the circuit breaker is tilted within said primary plane to permit rectilinear movement of the circuit breaker relative to the rail to disengage the fixed retaining formation from the rail. This necessitates a temporary removal of the bus-bar, and this is inconvenient since it involves disruption of the connections of other circuit breakers and/or of other electrical equipment used in relation to the bus-bar.

Numerous suggestions have been made for the provision of a more convenient mounting of circuit breakers of the kind specified to the mounting rail, to enable them to be removed and replaced with minimal disruption. However heretofore all other suggestions have been unsatisfactory in one aspect or other, and/or unduly expensive.

EP-A-0109881 discloses a supply assembly utilising a mounting rail which is not of the aforesaid DIN-profile but instead is of a complex H-section. A back face of the rail is held by a frame or bottom part of a casing, and a front fixing face of the rail provides for the securing of switchgear (circuit breakers). The back fixing face of the mounting rail provides for the attachment of auxiliaries such as terminal blocks which may include bus bars, but connection of a circuit breaker to a bus bar has to be effected by a separate connecting conductor, so that the arrangement is inconvenient to use.

According to this invention there is provided an assembly for use in the supply of electricity to circuit breakers of the kind having a contact member projecting downwardly therefrom, the assembly comprising an elongate mounting rail of the kind comprising a base, parallel upwardly-facing flanges, and outwardly turned lips, an elongate electricity supply member for the supply of electricity to circuit breakers mounted on the mounting rail, a supporting assembly for the mounting rail, comprising two end housings each comprising a body providing an engagement surface against which the underside of the base of the mounting rail may be engaged and spaced arms, extending from said engagement surface, at least one of said arms comprising location means to enable one of the outwardly turned lips to be engaged therewith, and at least one of the arms being resilient to enable the mounting rail to be snap-fitted into position against the engagement surface between said arms, means for supporting the supply member in fixed relationship with the mounting rail, the mounting rail and the supply member being so secured that the supply member is located to one side of and below the mounting rail, the arrangement of the mounting rail and the supply member being such that mounting a circuit breaker on the mounting rail causes the contact member of the circuit breaker to pass into conductive engagement with the supply member.

Preferably the housings have projections to engage in apertures in the base of the mounting rail.

Further features of the invention are set forth in the claims of the application.

There will now be given a detailed description, to be read with reference to the accompanying drawings, of preferred embodiments of this invention, which have been selected for the purposes of illustrating the invention by way of example.

In the accompanying drawings:

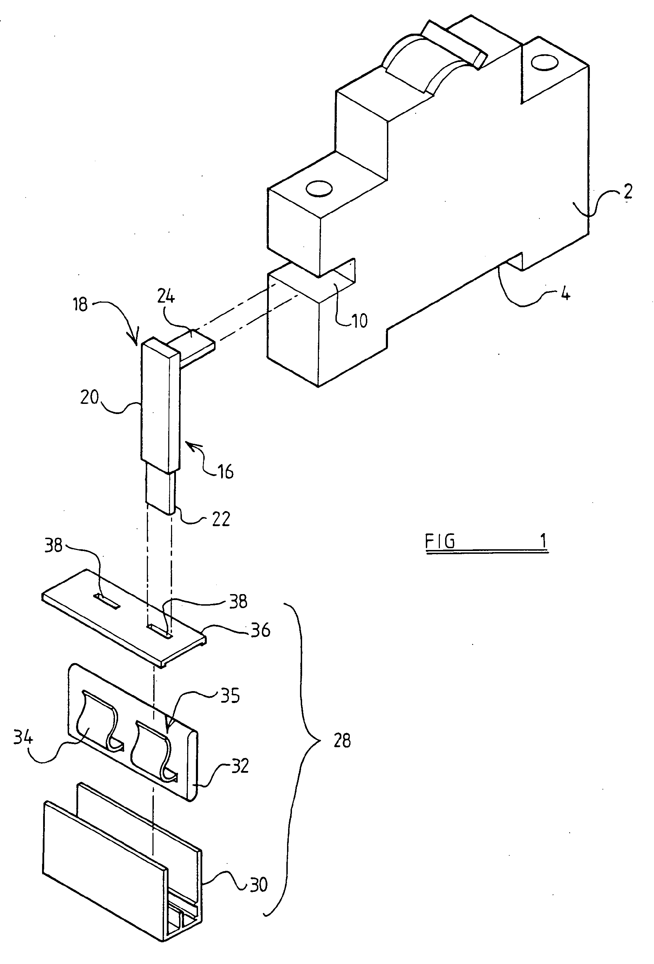

FIGURE 1 is an exploded view of an assembly of circuit breaker, and supply assembly which form part of a first embodiment of the invention;
FIGURE 2 is a schematic sectional view showing the circuit breaker mounted on a mounting rail, and connected with the supply assembly; and
FIGURE 3 is a schematic sectional view of an alternative construction of a circuit breaker and supply assembly;
FIGURES 4a, 4b and 4c are outline views showing the circuit breaker illustrated in Figure 3;
FIGURE 5 is a perspective view of a supporting assembly of the second embodiment;
FIGURES 6a and 6b are end elevations of said supporting assembly, illustrating a movement into operative positions thereon of a mounting rail;
FIGURE 7 is an exploded perspective view of a supply assembly of the second embodiment; and
FIGURE 8 is a schematic view showing the mounting of the circuit breaker on the mounting rail of the second embodiment, and engaging with the supply assembly.

The circuit breaker of the first embodiment is generally conventional, comprising a housing 2 having generally flat, parallel side faces and provided on the underside thereof with a mounting recess 4, for mounting on a mounting rail 6 of conventional "top hat" section, and of the kind conventionally referred to as "din rail", the rail comprising a base 7, spaced, parallel flanges 8 extending from the base, and parallel outwardly extending flanges 9a and 9b which together provides a support surface which may be engaged by an underside of the recess 4.

In use, a plurality of circuit breakers are mounted on the mounting rail 6 with the side faces thereof in generally abutting relationship, with a primary plane of each circuit breaker, extending parallel to the flat sides thereof, extending at right angles to the length of the mounting rail.

The housing is provided on one side thereof with an aperture 11, which together with a connecting screw 12, provides means by which the circuit breaker may be secured to a conventional bus-bar, the bus-bar in use extending into the aperture 10 and being held in position by the screw 12. However in accordance with this invention the circuit breaker is provided with a contact assembly 16, comprising a generally L-shaped contact member 18 over the majority of the length of which is provided an insulating sheath or sleeve 20, leaving a residual, uninsulated terminal portion 22 and a contact portion 24, constituting the shorter limb of the assembly 16.

The contact member extends downwardly from the circuit breaker in a direction extending at right angles to the primary plane of the circuit breaker, and at right angles towards the plane of engagement between the recess 4 of the circuit breaker and the flanges 9, 9 of the mounting rail, with the terminal portion; preferably in the form of a flat blade, projecting beyond said plane of engagement.

The circuit breaker of the first embodiment for use with a supply assembly 28 comprising an elongate housing 30 within which an elongate bus-bar 32 is located, the bus-bar being provided at spaced intervals with spring clips 34, each spring clip being provided at an upper end portion thereof with an outwardly-flared entrant portion 35. The bus-bar is located within the housing, which comprises a cover 36, provided at spaced intervals, corresponding to the spacing between the spring clips 34, with apertures 38.

The bus-bar 32 is preferably provided with a flat contact face 33, extending in the longitudinal direction parallel to the length of the mounting rail 6, and at right angles to the primary planes of the circuit breakers when mounted thereon, to be engaged by the flat face of the terminal portion 22 of each contact member 18.

In the practice of the present invention, the contact assembly 16 is secured to the body of the circuit breaker 2, the contact portion 24 being located in the aperture 10 and being secured therein by means of the screw 12, with the terminal portion 22 projecting in a direction generally at right angles to the underside of the aperture 4, and beyond the plane of said underside. The circuit breaker is moved towards the mounting rail 6, with said underside 5 engaging the surfaces 8 provided by the out-turned flanges and the terminal portion 18 passes through one of the apertures 38, engages the opening portion 35 of the spring clip 34 as it moves into contact with the bus-bar 32, the spring clip thereafter retaining the terminal portion 18 in face-to-face contact with the bus-bar.

By this means the circuit breaker may be removed from the mounting rail and supply assembly 30 by simple linear movement in the direction of the arrow A, minimising disruption of the bus-bar and other components which may be mounted on the bus-bar.

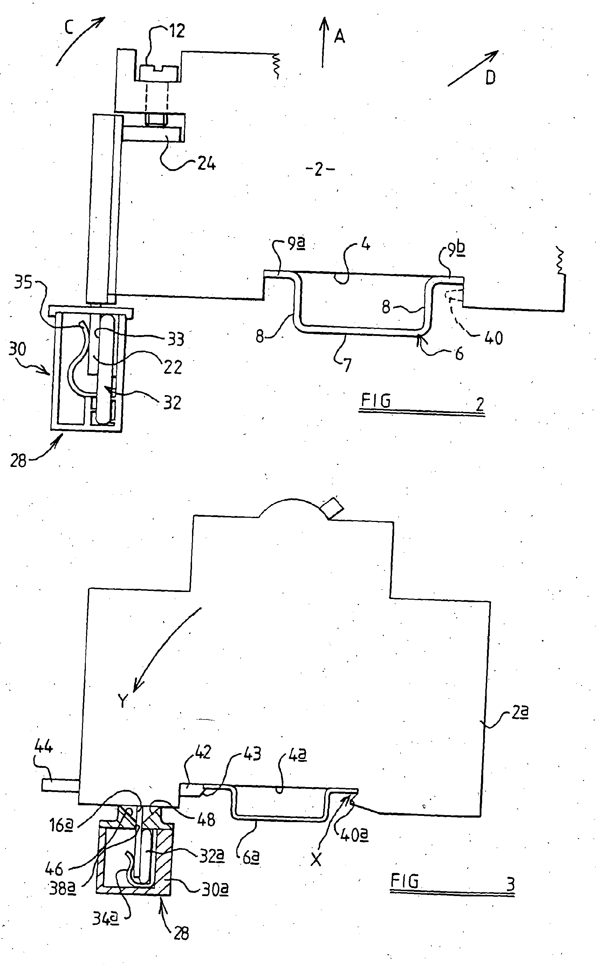

However if greater stability is required, a projection may be provided on the right hand side of the housing, as shown in dotted lines and indicated by the numeral 40 in Figure 2, which is engageable beneath the right hand flange 8, to provide greater stability. In such circumstances the circuit breaker may be removed from the mounting rail and bus-bar assembly initially by rotational motion in a clockwise direction,[as indicated by the arrow C] until the terminal portion 22 passes from the aperture 38 of the housing, subsequent to which translational movement in the general direction D may be effected to complete removal of the circuit breaker from the din-rail.

In the second embodiment, in which similar numerals increased by 100 have been used to denote parts similar to those of the first embodiment, the contact element 116 is electrically connected to the circuit breaker internally thereof, comprising a terminal portion 118 which projects from the underside of the circuit breaker.

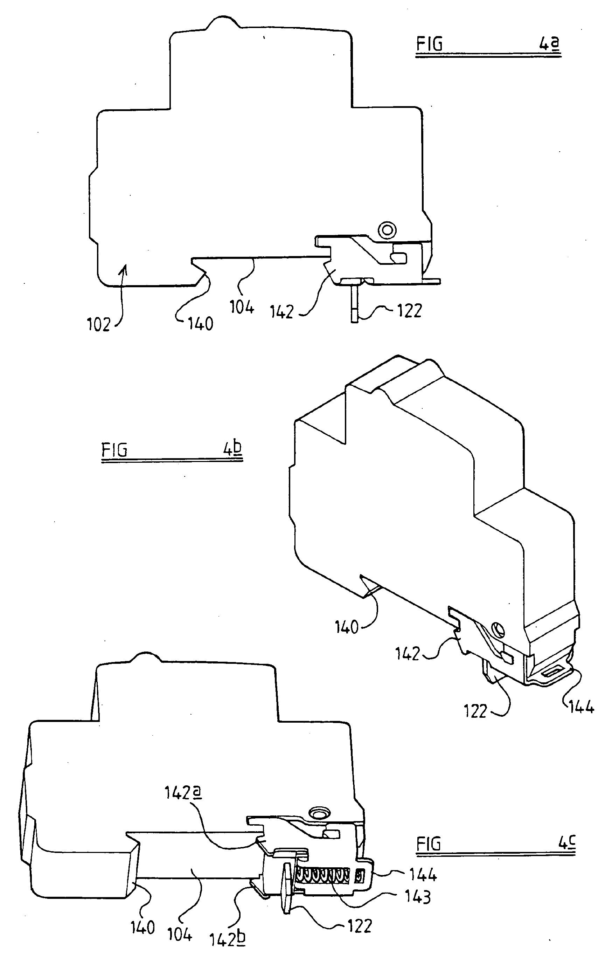

Further, in addition to having a fixed projection 140, the circuit breaker is provided with a retractable projection 142 extending into the recess 104 from the opposite side, said projection 142 being urged by a spring 143 to its advanced position, and being retractable by engagement of a tail 144, by a tool such as a screw driver. Preferably, as is shown in Figure 4c, the projection 142 is provided by spaced flanges, each having a nose portion 142a 142b respectively, serving together as the retractable projection. In this manner, the terminal portion 122 may be arranged so as to project between said flanges 142a 142b without contact.

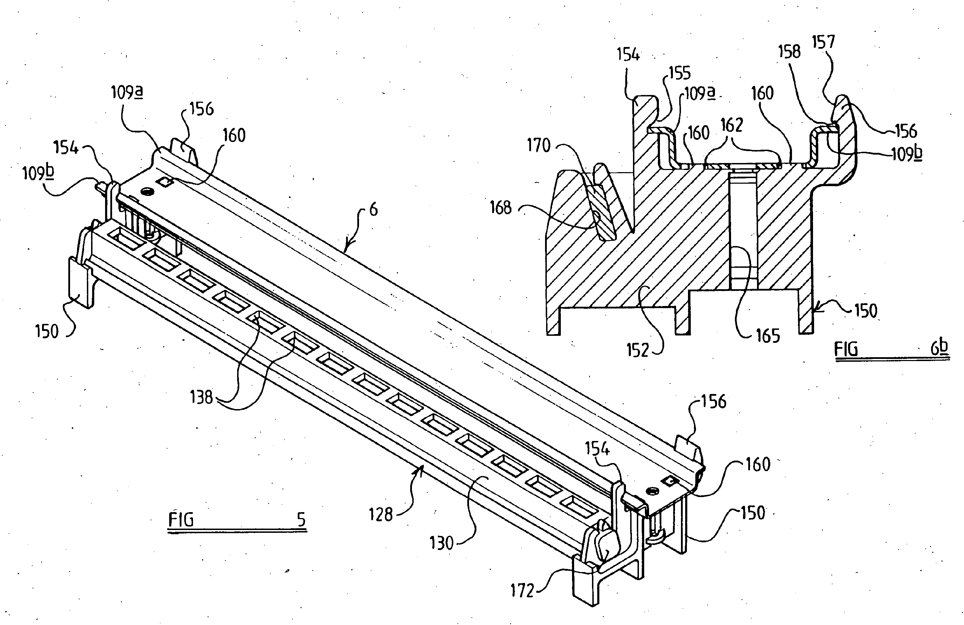

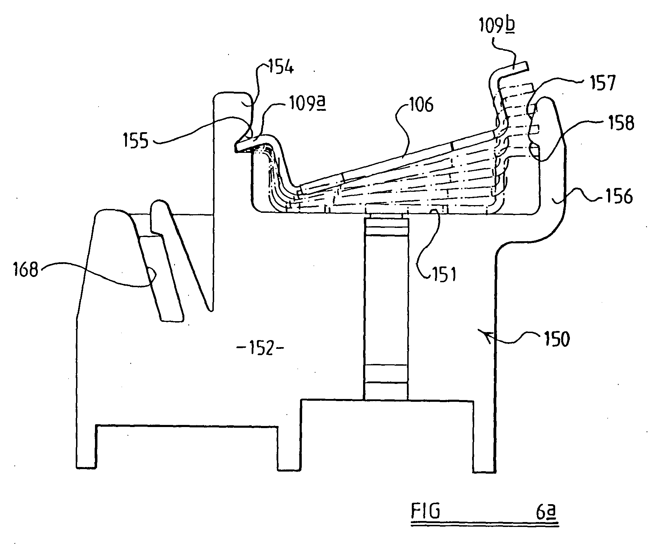

The second embodiment utilises a supporting assembly, shown in Figures 5 and 6, comprising two end housings 150, each comprising a body 152, and parallel arms 154 and 156 extending upwardly therefrom. The arm 154 is provided with a notch 155, whilst the arm 156 is provided with a cam face 157, extending to a re-entrant section 158.

One flange 109a of the mounting rail 106 may be engaged in the notch 155, and the opposite flange 109b pressed against the arm 156, engaging the cam face 157 and causing the arm 156 to flex outwardly, allowing the flange 109 to pass beneath the re-entrant face 158, with the base 107 of the flange resting against a flat upper surface 15 of the body 152.

As shown in Figure 5, extending upwardly from said flat surface of the body are projections 160, conveniently of rectangular cross-section, adapted to locate in complementary apertures 162 in the base 7 of the mounting rail.

Additionally the body 152 is provided means, conveniently in the form of an aperture 165, to enable a securing element such as a screw to be passed through a hole 166 in the mounting rail for further securement, such as to a mounting surface.

In this manner the mounting rail 106 may readily be secured in a desired position, for the reception of circuit breakers and ancillary equipment.

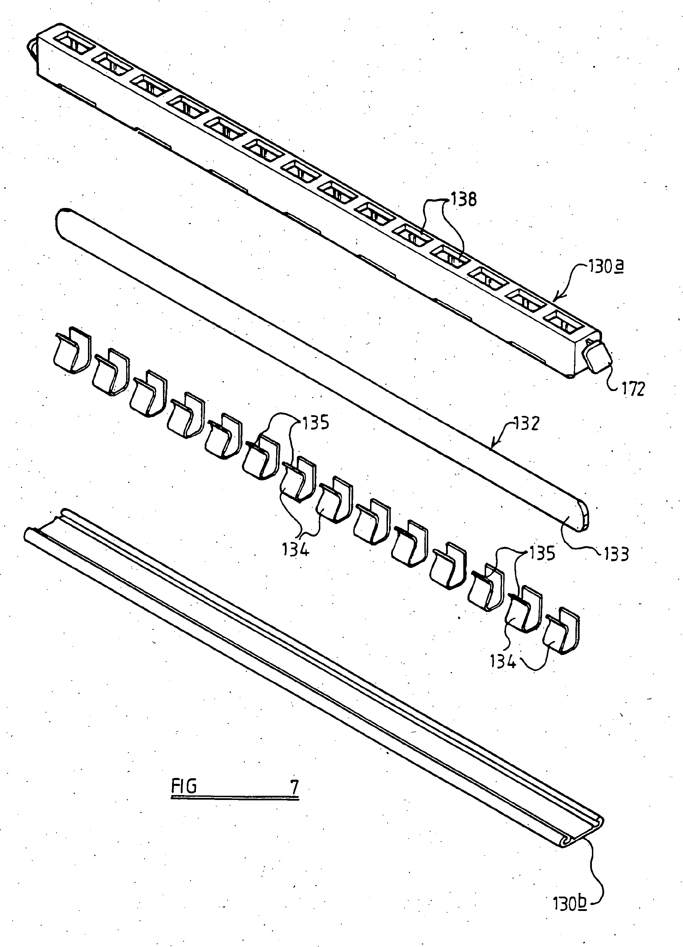

The supporting assembly also provides a support for the supply assembly 128, said supply assembly being shown in exploded form in Figure 7 and comprising an elongate housing 130 comprising an up housing part 130a and a lower housing part 130b adapted to be snap-fitted together, an elongate supply member in the form of a bus-bar 132 located in the housing, and a plurality of spring clips 144 of generally U-shape embracing the bus-bar. The bus-bar is provided with generally parallel side faces, and each spring clip 134 is provided with an outwardly-flared terminal portion 135 for the reception of a contact element, as will be described hereinafter.

Each housing is provided with a slot 168, within which a location member 170 of an end cap 172 of the housing 130 may be engaged, firmly to secure the supply assembly to the end housing 150.

In this manner a sub-assembly comprising a mounting rail 106 and supply member 132, may be presented ready for installation, which may be accomplished simply by securing the sub-assembly by the use of screws to a supporting surface, ready for the reception of circuit breakers and ancillary equipment, including equipment to supply power to the bus-bar.

The housing 130 of the supply assembly is provided with upwardly-facing apertures 138 of a spacing equal to the width of a conventional circuit breaker, in turn being equal to the spacing of the spring clips 134 on the bus-bar 132.

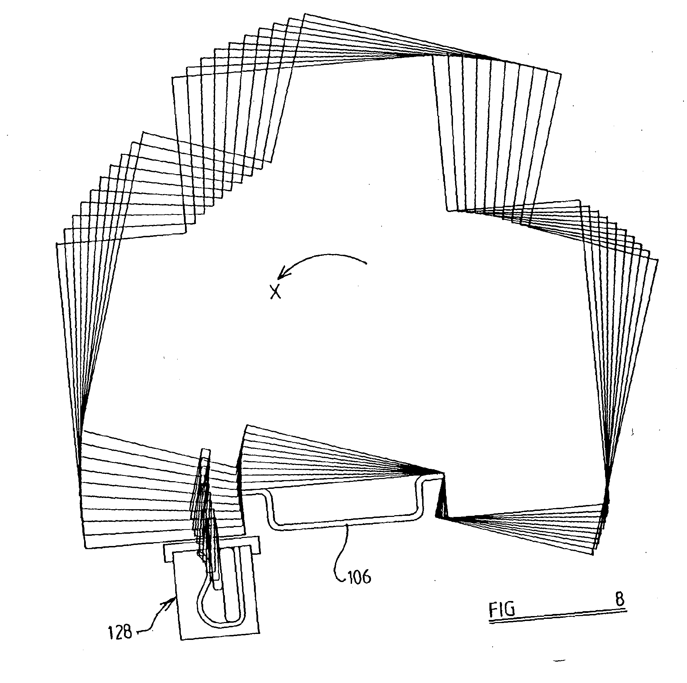

In the use of the sub-assembly, the fixed projection 140 of a circuit breaker is engaged with the flange 109b of the mounting rail, and the circuit breaker is rotated in the direction of the arrow (Figure 8) until the retractable projection 142 engages against the flange 109a causing the projection 142 to be withdraw against the action of the spring 143 until said projection passes behind the flange 109a.

As this occurs, the contact portion 122 passes through one of the apertures 138, and engages the outwardly-flared margin 135 of an associated spring clip 134, the contact portion passing into engagement with the bus-bar 132 and being held there against by said spring clip, with the generally flat faces of the contact portion and bus-bar engaging to provide good electrical contact.

On the removal of the circuit breaker from the assembly, the tail 144 may be retracted by the use of tool such as a screw driver to allow the circuit breaker to be rotated in a direction opposite to the direction, withdrawing the contact portion 122 from the supply assembly, and this may be accomplished with no danger of inadvertently touching electrically live parts of the system.

It will be appreciated that whilst the invention has been described above in relation to the mounting of circuit breakers on mounting rails into electrical contact with a bus-bar, in general it will be desirable to use the same construction in relation to the mounting of other items of electrical equipment including main switches, transformers, RCDs, etc. Thus, where these need to be connected to the bus-bar, they will be provided with contact members similar to the contact members 22 of the circuit breakers above described, enabling them to be mounted on the mounting rail 6, and brought into contact with the bus-bar 32 as hereinbefore described.

Moreover, by virtue of the supply assembly being located to one side, and below the mounting rail 6 (as shown in Figures 2 and 3) other electrical components, which may include time switches, time clocks, transformers and the like, but which do not need to be connected to the bus-bar, may be mounted on the mounting rail 6 in a conventional manner, without any interference from the supply assembly. Such ancillary equipment may conveniently enter into engagement with the upper surface of the housing 130a, as would be the case if a conventional circuit breaker, not having a downwardly-extending contact member 22, were mounted on the mounting rail.

Modifications are possible within the scope of the appended claims.

## Claims

1. An assembly for use in the supply of electricity to circuit breakers (2,102) of the kind having a contact member (22,122) projecting downwardly therefrom,
the assembly comprising:
an elongate mounting rail (6) of the kind comprising a base (7), parallel upwardly-facing flanges (8), and outwardly turned lips (9a,9b),
an elongate electricity supply member (32,132) for the supply of electricity to circuit breakers (2,102) mounted on the mounting rail (6),
a supporting assembly for the mounting rail, comprising two end housings (150) each comprising a body (152) providing an engagement surface (151) against which the underside of the base (7) of the mounting rail may be engaged and spaced arms (154, 156), extending from said engagement surface, at least one of said arms (154, 156) comprising location means (155, 158) to enable one of the outwardly turned lips (9a and 9b) to be engaged therewith, and at least one of the arms (154, 156) being resilient to enable the mounting rail to be snap-fitted into a position against the engagement surface (151) between said arms (154, 156),
means (168) for supporting the supply member (132) in fixed relationship with the mounting rail, the mounting rail (6) and the supply member (32,132) being so secured that the supply member (32,132) is located to one side of and below the mounting rail (6),
the arrangement of the mounting rail (6) and the supply member (32,132) being such that mounting a circuit breaker (2,102) on the mounting rail (6) causes the contact member (22,122) of the circuit breaker (2,102) to pass into conductive engagement with the supply member (32,132).

2. A supply assembly according to claim 1 further **characterised by** projections (160) on the housings adapted to be located in apertures (162) in the mounting rail.

3. A supply assembly according to claim 1 or claim 2 further **characterised by** snap-fitting means (170) by which the supply member may accurately be secured to the housing assembly.

4. A supply assembly according to claim 3 further **characterised in that** the snap-fitting means (170) is adapted to be engaged directly with the supply member.

5. A supply assembly according to any one of the preceding further **characterised by** a housing (30) for the supply member, openings being provided to permit the contact member (22) of a circuit breaker to pass into conductive engagement with the supply member.

## Patentansprüche

1. Baugruppe zur Verwendung bei der Stromversorgung von Leitungsschutzschaltern (2, 102) der Art, die über ein Kontaktelement (22, 122) verfügt, das davon nach unten hervorsteht,
die Baugruppe umfassend:
eine lange Befestigungsschiene (6) der Art, die eine Basis (7), parallel nach oben weisende Flansche (8) und nach außen gedrehte Lippen (9a, 9b) umfasst,
ein langes Stromversorgungselement (32, 132) zur Stromversorgung von Leitungsschutzschaltern (2, 102), die auf der Befestigungsschiene (6) befestigt sind,
eine Tragebaugruppe für die Befestigungsschiene, umfassend zwei Endgehäuse (150), die jeweils einen Grundkörper (152) umfassen, der eine Eingrifffläche (151) bereitstellt, auf welcher die Unterseite der Basis (7) der Befestigungsschiene in Eingriff gebracht werden kann, und im Abstand zueinander angeordnete Arme (154, 156), die von der Eingrifffläche aus verlaufen, wobei mindestens einer der Arme (154, 156) Positionierungsmittel (155, 158) umfasst, um eine der nach außen gedrehten Lippen (9a und 9b) damit in Eingriff bringen zu können, und wobei mindestens einer der Arme (154, 156) elastisch ist, um die Befestigungsschiene in eine Position auf der Eingrifffläche (151) zwischen den Armen (154, 156) einschnappen zu können,
Mittel (168) zum Tragen des Versorgungselements (132) in einer feststehenden Beziehung zur Befestigungsschiene, wobei die Befestigungsschiene (6) und das Versorgungselement (132) so gesichert sind, dass das Versorgungselement (32, 132) auf einer Seite der Befestigungsschiene (6) und unterhalb von dieser positioniert ist,
wobei die Anordnung der Befestigungsschiene (6) und des Versorgungselements (32, 132) so erfolgt, dass die Befestigung eines Leitungsschutzschalters (2, 102) auf der Befestigungsschiene (6) das Passieren des Kontaktelements (22, 122) des Leitungsschutzschalters (2, 102) so bewirkt, dass es in leitenden Eingriff mit dem Versorgungselement (32, 132) kommt.

2. Versorgungsbaugruppe gemäß Anspruch 1, des Weiteren **gekennzeichnet durch** Vorsprünge (160) auf den Gehäusen, die dazu angepasst sind, dass sie in Öffnungen (162) in der Befestigungsschiene positioniert werden können.

3. Versorgungsbaugruppe gemäß Anspruch 1 oder Anspruch 2, des Weiteren **gekennzeichnet durch** Einschnappmittel (170), **durch** die das Versorgungselement passgenau an der Gehäusebaugruppe gesichert werden kann.

4. Versorgungsbaugruppe gemäß Anspruch 3, des Weiteren **dadurch gekennzeichnet, dass** die Einschnappmittel (170) dazu angepasst sind, direkt mit dem Versorgungselement in Eingriff gebracht werden zu können.

5. Versorgungsbaugruppe gemäß einem der vorherigen Ansprüche, des Weiteren **gekennzeichnet durch** ein Gehäuse (30) für das Versorgungselement, wobei Öffnungen vorgesehen sind, die das Passieren des Kontaktelements (22) eines Leitungsschutzschalters ermöglichen, so dass es in leitenden Eingriff mit dem Versorgungselement kommt.

## Revendications

1. Un assemblage pour une utilisation dans l'alimentation en électricité de disjoncteurs (2, 102) de la sorte ayant un membre de contact (22, 122) faisant saillie vers le bas à partir de celui-ci,
l'assemblage comportant:
un rail de montage allongé (6) de la sorte comportant une base (7), des flasques parallèles orientés vers le haut (8), et des lèvres tournées vers l'extérieur (9a, 9b),
un membre d'alimentation en électricité allongé (32, 132) pour l'alimentation en électricité des disjoncteurs (2, 102) montés sur le rail de montage (6),
un assemblage de support pour le rail de montage, comportant deux logements d'extrémité (150) comportant chacun un corps (152) fournissant une surface de mise en prise (151) contre laquelle le dessous de la base (7) du rail de montage peut être mis en prise et des bras espacés (154, 156), s'étendant de ladite surface de mise en prise, l'un au moins desdits bras (154, 156) comportant un moyen de localisation (155, 158) pour permettre à l'une des lèvres tournées vers l'extérieur (9a et 9b) d'être mise en prise avec ce dernier, et l'un au moins des bras (154, 156) étant élastique afin de permettre au rail de montage d'être emboîté par pression dans une position contre la surface de mise en prise (151) entre lesdits bras (154, 156),
un moyen (168) pour supporter le membre d'alimentation (132) dans une relation fixe avec le rail de montage, le rail de montage (6) et le membre d'alimentation (32, 132) étant assujettis de façon à ce que le membre d'alimentation (32, 132) soit situé d'un côté de et sous le rail de montage (6),
l'agencement du rail de montage (6) et du membre d'alimentation (32, 132) étant tel que le montage d'un disjoncteur (2, 102) sur le rail de montage (6) amène le membre de contact (22, 122) du disjoncteur (2, 102) à passer en mise en prise conductrice avec le membre d'alimentation (32, 132).

2. Un assemblage d'alimentation selon la revendication 1 **caractérisé de plus par** des saillies (160) sur les logements adaptées pour être situées dans des interstices (162) dans le rail de montage.

3. Un assemblage d'alimentation selon la revendication 1 ou la revendication 2 **caractérisé de plus par** un moyen d'emboîtage par pression (170) par lequel le membre d'alimentation peut être assujetti de façon précise à l'assemblage de logement.

4. Un assemblage d'alimentation selon la revendication 3 **caractérisé de plus en ce que** le moyen d'emboîtage par pression (170) est adapté pour être mis en prise directement avec le membre d'alimentation.

5. Un assemblage d'alimentation selon n'importe laquelle des revendications précédentes **caractérisé de plus par** un logement (30) pour le membre d'alimentation, des ouvertures étant fournies pour permettre au membre de contact (22) d'un disjoncteur de passer en mise en prise conductrice avec le membre d'alimentation.
